# EUROPEAN PATENT APPLICATION

(11) **EP 4 513 653 A1**
(43) Date of publication of application: **26.02.2025**
(21) Application number: 24744838.4
(22) Date of filing: 16.01.2024
(51) Int. Cl.: H01M 50/446, H01M 50/451, H01M 50/489, H01M 50/414, H01M 10/052, H01M 50/431, H01M 50/403, H01M 50/491

(54) **ELECTROCHEMICAL DEVICE SEPARATOR, MANUFACTURING METHOD THEREFOR AND ELECTROCHEMICAL DEVICE COMPRISING SAME**

(30) Priority: 20.01.2023 KR 20230008431; 15.01.2024 KR 20240005913
(71) Applicant: LG Energy Solution, Ltd., Seoul 07335 (KR)
(72) Inventor: LEE, So Yeong, Daejeon 34122 (KR); LEE, Byeong Kyu, Daejeon 34122 (KR); LEE, Yong Hee, Daejeon 34122 (KR); BAE, Won Sik, Daejeon 34122 (KR); BAK, Byeong Chan, Daejeon 34122 (KR)
(74) Representative: Hoffmann Eitle
(86) International application number: PCT/KR2024/000745
(87) International publication number: WO 2024/155058

(57) **Abstract**

A separator for an electrochemical device relates to a porous polymer base, and a porous coating layer including a particle area formed of a polymer binder particle and an inorganic particle and a filmed area including a deformed polymer binder particle and formed on at least any one surface of the porous polymer base, wherein the filmed area is in the range of 3 to 50 wt% with respect to the total weight of the polymer binder particles.

## Description

### [Technical Field]

The present disclosure relates to a separator for an electrochemical device, a method of manufacturing the separator, and an electrochemical device including the same.

### [Background Art]

Electrochemical devices convert chemical energy into electrical energy using an electrochemical reaction, and recently, lithium secondary batteries, which may have a high energy density and voltage, a long cycle lifetime and may be used in various fields, have been used widely.

A lithium secondary battery may include an electrode assembly formed of a positive electrode, a negative electrode, and a separator disposed between the positive electrode and the negative electrode, and the electrode assembly may be manufactured by being stored in a case together with an electrolyte. The separator may include a porous coating layer containing a polymer binder and inorganic particles on at least one surface of a porous base. The inorganic particles may be connected to other inorganic particles by the polymer binder to form an interstitial volume, and lithium ions may move by passing through the interstitial volume. In addition to fixing the inorganic particles, the polymer binder may provide an adhesion strength to the porous coating layer, and the porous coating layer may be bonded to each of a porous base and an electrode.

Conventionally, an aqueous particle type polymer binder has been used to form a one-component coating on a surface of a porous base such as polyolefin to form a porous coating layer with excellent heat resistance and adhesion strength. However, the porous coating layer had a problem of being easily separated from the porous base in a process of manufacturing an electrode assembly and an electrochemical device due to low durability.

Therefore, research on a separator having a structure that prevents the porous coating layer from being easily separated from the porous base while maintaining the advantages of the porous coating layer containing an aqueous particle polymer binder and the physical properties of the separator, and a method of manufacturing the same has been performed.

### [Summary of Invention]

### [Technical Problem]

The present disclosure is directed to providing a method of manufacturing a separator for an electrochemical device, which has an excellent adhesion strength for a porous base and an electrode by improving durability of a porous coating layer containing a polymer binder and inorganic particles.

### [Solution to Problem]

One aspect of the present disclosure provides a separator for an electrochemical device including a porous polymer base, and a porous coating layer including a particle area formed of a polymer binder particle and an inorganic particle and a filmed area including a deformed polymer binder particle and formed on at least any one surface of the porous polymer base, wherein the filmed area is in the range of 3 to 50 wt% with respect to the total weight of the polymer binder particles.

When an end of a diamond tip is disposed in an area between a surface in contact with the porous polymer base of the porous coating layer and an opposite surface facing the surface and the diamond tip moves in a direction parallel to the porous polymer base at a speed of 100 mm/min, a first kinetic friction coefficient due to frictional wear may be in the range of 1 to 2.

When an end of a diamond tip is disposed in an area between a surface in contact with the porous polymer base of the porous coating layer and an opposite surface facing the surface and the diamond tip moves in a direction parallel to the porous polymer base at a speed of 100 mm/min, a difference between a static friction coefficient due to frictional wear and a first kinetic friction coefficient may be 3 or less.

An adhesion strength between the porous polymer base and the porous coating layer may be in the range of 1.5 to 6 times an adhesion strength shown by an opposite surface facing a surface in contact with the porous polymer base of the porous coating layer.

The polymer binder particle may contain one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber, and acrylonitrile-butadiene-styrene rubber.

The filmed area may be formed by exposing the polymer binder particle at a temperature in the range of a glass transition temperature T_{g} to T_{g}+40°C of the polymer binder particle.

One aspect of the present disclosure provides an electrochemical device including a positive electrode, a negative electrode, and a separator disposed between the positive electrode and the negative electrode, wherein the separator is the separator for an electrochemical device according to the one aspect.

The electrochemical device may be a lithium secondary battery.

One aspect of the present disclosure provides a method of manufacturing a separator for an electrochemical device including forming a coating layer including a particle area formed of a polymer binder particle and an inorganic particle by coating at least one surface of a porous polymer base with a coating slurry including the polymer binder particle, the inorganic particle, and a dispersion medium, removing the dispersion medium by drying the coating layer, and forming a filmed area by deforming 3 to 50 wt% with respect to the total weight of the polymer binder particle by drying the coating layer.

The removing of the dispersion medium may include preventing a surface of the coating layer from exceeding 50°C.

The forming of the filmed area may include exposing the coating layer at a temperature in the range of a glass transition temperature T_{g} to T_{g}+40°C of the polymer binder particle for 24 hours or less.

### [Advantageous Effects]

According to the separator for an electrochemical device according to the present disclosure, by deforming the predetermined amount of polymer binder particles in a form of a film, the separation strength between the porous coating layer and the porous polymer base can be increased without degrading air permeability and electrical resistance.

### [Brief Description of Drawings]

FIG. 1 is a plan view of a separator according to one embodiment of the present disclosure, which is a conceptual diagram showing the appearance of a porous coating layer 20.
FIG. 2 is a cross-sectional view of the separator 1 according to one embodiment of the present disclosure, which is a conceptual diagram showing a state when a diamond tip T is inserted into a porous coating layer 20 by a depth D for measuring a friction coefficient according to the content of one embodiment.

### [Description of Embodiments]

Hereinafter, each configuration of the present disclosure will be described in more detail so that those skilled in the art to which the present disclosure pertains can easily implement the present disclosure, but is only an example, and the scope of the present disclosure is not limited by the following description.

The term "including" used herein is used to list materials, compositions, devices, and methods useful in the present disclosure and is not limited to the listed examples.

The term "about" and "substantially" used herein are used to mean a range or approximation of a number or degree in consideration of unique manufacturing and material tolerances and are used to prevent infringers from unfairly using the disclosed content in which accurate or absolute values provided to help the understanding of the present disclosure are mentioned.

The term "electrochemical device" used herein may refer to a primary battery, a secondary battery, a super capacitor, etc.

The term "filmed area" used herein refers to an area in which a polymer binder contained in a porous coating layer is exposed to a temperature higher than an inherent glass transition temperature T_{g} and deformed because it may not maintain its original shape, or an area formed by being physically or chemically connected to one or more adjacent polymer binders according to the deformation.

Hereinafter, although the present disclosure has been described by specific examples and embodiments, the present disclosure is not limited thereto and may include a case where any one or more configurations among the specific examples and the embodiments are coupled by those skilled in the art to which the present disclosure pertains, and various modification and changes are possible within the equivalent scope of the technical spirit and appended claims of the present disclosure.

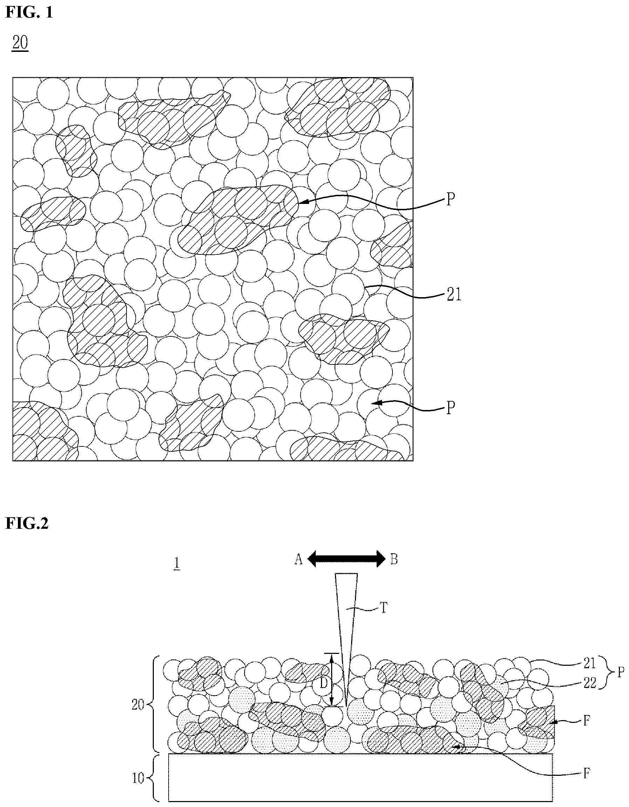

Hereinafter, one specific example of the present disclosure will be described with reference to FIGS. 1 and 2. FIG. 1 is a plan view of a separator according to one specific example of the present disclosure, which is a conceptual diagram showing the appearance of the porous coating layer 20, and FIG. 2 is a side view of the separator 1, which is a conceptual diagram showing a process of measuring a friction coefficient by inserting a diamond tip T into the porous coating layer 20.

One specific example of the present disclosure provides the separator 1 for an electrochemical device, including a porous polymer base 10, and a porous coating layer 20 including a particle area P composed of a polymer binder particle 21, and an inorganic particle 22, and a filmed area F including a deformed polymer binder particle and formed on at least any one surface of the porous polymer base 10, and the filmed area F is in the range of 3 to 50 wt% with respect to the total of the polymer binder particles.

The porous polymer base 10 is a porous membrane in which a plurality of pores are formed and can prevent a short by electrically insulating a positive electrode and a negative electrode. For example, when the electrochemical device is a lithium secondary battery, the porous polymer base 10 may be an ion conductive barrier that allows lithium ions to pass therethrough while blocking electrical contact between the positive and negative electrodes. At least some of the pores may form a three-dimensional network communicating with the surface and inside of the porous polymer base 10, and a fluid may pass through the porous polymer base 10 through the pores.

The porous polymer base 10 may use a material that is physically and chemically stable with respect to an electrolyte that is an organic solvent. For example, the porous polymer base 10 is made of a resin such as polyolefins, such as polyethylene, polypropylene, and polybutylene, polyvinyl chloride, polyethylene terephthalate, polycycloolefin, polyethersulfone, polyamide, polyimide, polyimideamide, nylon, polytetrafluoroethylene, and copolymers or mixtures thereof, but is not limited thereto. Preferably, a polyolefin-based resin may be used. The polyolefin-based resin may be processed into a relatively small thickness and easily applied with a coating slurry, and thus is suitable for manufacturing the electrochemical device having a higher energy density.

The porous polymer base 10 may have a single-layer or multilayered structure. The porous polymer base 10 may include two or more polymer resin layers having different melting points Tm and provide a shutdown function when a battery runs away at a high temperature. For example, the porous polymer base 10 may include a polypropylene layer having a relatively high melting point and a polyethylene layer having a relatively low melting point. Preferably, the porous polymer base 10 may have a three-layer structure in which polypropylene, polyethylene, and polypropylene are stacked sequentially. As the temperature of the battery increases to a predetermined temperature or higher, the polyethylene layer melts and shuts down the pores to prevent thermal runaway of the battery.

A thickness of the porous polymer base 10 may be in the range of 1 µm or more and 100 µm or less. Specifically, the thickness of the porous polymer base 10 may be in the range of 10 µm or more and 90 µm or less, 20 µm or more and 80 µm or less, 30 µm or more and 70 µm or less, or 40 µm or more and 60 µm or less. Preferably, the thickness of the porous polymer base 10 may be in the range of 1 µm or more and 30 µm or less. More preferably, the thickness of the porous polymer base 10 may be in the range of 5 µm or more and 15 µm or less, or 8 µm or more and 13 µm or less. By adjusting the thickness of the porous polymer base 10 within the above-described range, the amount of active material included in the electrochemical device may be increased by minimizing a volume of the electrochemical device while electrically insulating the positive and negative electrodes.

The porous polymer base 10 may include pores whose average diameter is in the range of 0.01 µm or more and 1 µm or less. Specifically, the size of the pores included in the porous polymer base 10 may be in the range of 0.01 µm or more and 0.09 µm or less, 0.02 µm or more and 0.08 µm or less, 0.03 µm or more and 0.07 µm or less, or 0.04 µm or more and 0.06 µm or less. Preferably, the size of the pore may be in the range of 0.02 µm or more and 0.06 µm or less. By adjusting the pore size of the porous polymer base 10 within the above-described range, the air permeability and ionic conductivity of the entirety of the manufactured separator may be adjusted.

The porous polymer base 10 may have an air permeability of 10 s/100 cc or more and 100 s/100 cc or less. Specifically, the air permeability of the porous polymer base 10 is in the range of 10 s/100 cc or more and 90 s/100 cc or less, 20 s/100 cc or more and 80 s/100 cc or less, 30 s/100 cc or more and 70 s/100 cc or less, or 40 s/100cc or more and 60 s/100 cc or less. Preferably, the air permeability of the porous polymer base 10 may be in the range of 50 s/100 cc or more and 70 s/100 cc or less. When the air permeability of the porous polymer base 10 is within the above-described range, the air permeability of the manufactured separator can be provided in a range suitable for securing the output and cycle characteristics of the electrochemical device.

The air permeability (s/100 cc) refers to the time (seconds) it takes for 100 cc of air to pass through the porous polymer base 10 or the separator 1 that has a predetermined area under a constant pressure. The air permeability may be measured by using a Gurley densometer according to ASTM D 726-58, ASTM D726-94, or JIS-P8117. For example, Gurley's 4110N equipment may be used to measure the time it takes for 100 cc of air to pass through a 1 square inch (or 6.54 cm²) sample under a pressure of 0.304 kPa of air or 1.215 kN/m² of water. For example, the Asahi Seiko EG01-55-1MR equipment may be used to measure the time it takes for 100 cc of air to pass through a 1 square inch sample under a constant pressure of 4.8 inches of water at room temperature.

The porous polymer base 10 may have a porosity of 10 vol% or more and 60 vol% or less. Specifically, the porosity of the porous polymer base 10 may be in the range of 15 vol% or more and 55 vol% or less, 20 vol% or more and 50 vol% or less, 25 vol% or more and 45 vol% or less, or 30 vol% or more and 40 vol% or less. Preferably, the porosity of the porous polymer base 10 may be in the range of 30 vol% or more and 50 vol% or less. When the porosity of the porous polymer base 10 is within the above-described range, the ionic conductivity of the manufactured separator 1 may be provided in a range suitable for securing the output and cycle characteristics of the electrochemical device.

The porosity refers to a volume ratio of pores to the total volume of the porous polymer base 10. The porosity may be measured by a method known in the art. For example, the porosity may be measured by BET (Brunauer Emmett Teller) measurement using adsorption of nitrogen gas, a capillary flow porometer, or a water or mercury permeation method.

The porous coating layer 20 is formed on at least any one surface of the porous polymer base 10 and includes the polymer binder particle 21 and the inorganic particle 22. The porous coating layer 20 may be formed by coating at least one surface of the porous polymer base 10 with a coating slurry containing the polymer binder particle 21, the inorganic particle 22, and a dispersion medium. The porous coating layer 20 is bonded to the porous polymer base 10 by including an interstitial volume in which the inorganic particles 22 are connected by the polymer binder particle 21 to allow lithium ions to pass therethrough, thereby preventing thermal shrinkage of the porous polymer base 10.

The coating slurry may include the dispersion medium to dissolve or disperse at least some of the polymer binder particles 21 and disperse the inorganic particles 22. The coating slurry may be used to uniformly disperse the polymer binder particle 21 and the inorganic particle 22 by adjusting the type and content of the dispersion medium. For example, the dispersion medium may be one selected from the group consisting of water, ethanol, acetone, isopropyl alcohol (IPA), dimethylacetamide (DMAc), dimethylformamide (DMF), N-methyl-2-pyrrolidone (NMP), acetonitrile, and combinations thereof. Preferably, the dispersion medium may be a mixture of water and isopropyl alcohol or water. The porous coating layer 20 in which the polymer binder particle 21 and the inorganic particle 22 are uniformly dispersed using the above-described type of dispersion medium may be formed.

The coating slurry may further include an additive such as a dispersant, a surfactant, an anti-foaming agent, and a flame retardant to improve dispersibility and flame retardancy and improve the uniformity of the formed porous coating layer 20. For example, the dispersant may include one or more selected from the group consisting of polyacrylic acid, oil-soluble polyamine, oil-soluble amine compound, fatty acids, fatty alcohols, sorbitan fatty acid ester, tannic acid, and pyrogallic acid. By using the above-described type of dispersant, it is possible to improve the stability of the coating slurry and secure the uniformity of the porous coating layer 20 formed of the coating slurry.

The additive may be included at 0 wt% or more and 5 wt% or less with respect to the total weight of the coating slurry. Specifically, the content of the additive may be in the range of 0.01 wt% or more and 4 wt% or less, 0.1 wt% or more and 3 wt% or less, or 1 wt% or more and 2 wt% or less. Preferably, the content of the additive may be in the range of 1 wt% or more and 5 wt% or less. By adjusting the content of the additive within the above-described range, it is possible to achieve uniform dispersion and stability of the inorganic particles contained in the coating slurry.

The dispersion medium contained in the coating slurry may be removed by drying or heating after the porous coating layer 20 is formed. For example, the porous coating layer 20 may include a dispersion medium at 5 ppm or less. Preferably, the porous coating layer 20 may be formed of polymer binder particle 21 and inorganic particle 22. In the process of removing the dispersion medium, a plurality of pores may be formed on the surface and inside the porous coating layer 20. The pore may include an interstitial volume formed between the inorganic particles 22 and have a structure through which a fluid may pass by forming a three-dimensional network.

The thickness of the porous coating layer 20 may be in the range of 1 µm or more and 15 µm or less. Specifically, the thickness of the porous coating layer 20 may be in the range of 2 µm or more and 14 µm or less, 3 µm or more and 13 µm or less, 4 µm or more and 12 µm or less, 5 µm or more and 11 µm or less, 6 µm or more and 10 µm or less, or 7 µm or more and 9 µm or less. Preferably, the thickness of the porous coating layer 20 may be in the range of 1 µm or more and 5 µm or less, more preferably, 1 µm or more and 3 µm or less. By adjusting the thickness of the porous coating layer 20 within the above-described range, it is possible to minimize shrinkage of the porous polymer base 10, thereby achieving stable bonding to the porous polymer base 10.

The polymer binder particles 21 may bind the inorganic particles 22 contained in the porous coating layer 20 and provide an adhesion strength to the porous coating layer 20. The polymer binder particle 21 may have a spherical or oval shape, but may also include other shapes excluding an amorphous shape. When the polymer binder particle 21 is exposed to a temperature higher than the glass transition temperature T_{g} of the polymer binder particle 21, the polymer binder particle 21 may no longer maintain the shape of the particle and may be deformed to form the filmed area F.

The filmed area F may be an irregular area formed as the polymer binder particle 21 may not maintain an original shape and solidify in a collapsed state, and may be formed by one or more polymer binder particles 21 bound with each other. The porous coating layer 20 may include the filmed area F and the particle area P that is the remaining area. The particle area P may be formed of the polymer binder particle 21 and the inorganic particle 22 as the dispersion medium is removed from the coating slurry. The filmed area F may be formed by deforming the shape of one or more polymer binder particles 21 contained in the particle area P. Referring to FIGS. 1 and 2, the porous coating layer 20 may include one or more filmed areas F. The remaining area of the porous coating layer 20 excluding the filmed area F may be referred to as the particle area P. The filmed area F may be bonded to one or more of the polymer binder particle 21, the inorganic particle 22, the porous polymer base 10, and another filmed area F that are contained in the adjacent particle area P. The filmed area F may have a smaller surface area than the polymer binder particle 21 having the same weight, but have a greater surface area in contact with another polymer binder particle 21, another filmed area F, or the inorganic particle 22 contained in the porous coating layer 20. For example, while the spherical polymer binder particle 21 is bonded in contact with the spherical inorganic particle 22 with a relatively small surface area, the irregular filmed area F may be bonded in contact with the spherical inorganic particle 22 with a relatively large surface area. The porous coating layer 20 including the filmed area F may show a higher adhesion strength to the porous polymer base 10. In addition, the porous coating layer 20 including the filmed area F may show a higher adhesion strength to a surface opposite to the surface in contact with the porous polymer base 10, that is, an electrode.

The filmed area F may be formed through additional drying or heating after forming the porous coating layer 20 by applying and drying the coating slurry on the porous polymer base 10. The filmed area F may be dispersed in the thickness direction of the porous coating layer 20. For example, the filmed area F may be dispersed between the surface in which the porous coating layer 20 is in contact with the porous polymer base 10 and the opposite surface facing the surface, that is, the surface in contact with the electrode. The filmed area F may be uniformly dispersed between both surfaces of the porous coating layer 20 and may not be densely dispersed on any one surface. It may mean that half or more of the filmed area F is dispersed between both surfaces of the porous coating layer 20 with respect to the weight of the entire filmed area. When half or more of the filmed area F is dispersed on any one surface or both surfaces of the porous coating layer with respect to the weight of the entire filmed area F, the pores formed on or inside the porous coating layer 20 may be closed. Preferably, the filmed area F may be uniformly dispersed in the thickness direction of the porous coating layer 20.

The filmed area F has a maximum cross-sectional area of 1.1 to 3.5 times the maximum cross section of the polymer binder particle 21 with respect to a planar surface parallel to one surface of the porous polymer base 10. Specifically, the maximum cross-sectional area of the filmed area F may be in the range of 1.3 times or more and 3.3 times or less, 1.5 times or more and 3.1 times or less, 1.7 times or more and 2.9 times or less, 1.9 times or more and 2.7 times or less, or 2.1 times or more and 2.5 times or less compared to the maximum cross-sectional area of the polymer binder particle 21. Preferably, the maximum cross-sectional area of the filmed area F may be in the range of 1.1 to 2.5 times the maximum cross-sectional area of the polymer binder particle 21. By adjusting a cross-sectional area ratio of the filmed area F and the polymer binder particle 21 within the above-described range, it is possible to secure the air permeability of the separator suitable for the electrochemical device and secure the adhesion strength to the porous polymer base 10.

The filmed area F may be in the range of 3 wt% or more and 50 wt% or less with respect to the total weight of the polymer binder particle 21 contained in the porous coating layer 20. The weight of the filmed area F may be in the range of 3 wt% or more and 50 wt% or less with respect to the sum of the total weight of the polymer binder particles 21 contained in the particle area P and the weight of the filmed area F. Specifically, the filmed area F may be in the range of 5 wt% or more and 45 wt% or less, 10 wt% or more and 40 wt% or less, 15 wt% or more and 35 wt% or less, or 20 wt% or more and 30 wt% or less with respect to the total weight of the polymer binder particles 21. Preferably, the filmed area F may be in the range of 3 wt% or more and 10 wt% or less, or 30 wt% or more and 50 wt% or less with respect to the total weight of the polymer binder particles 21. For example, when the polymer binder particle 21 is contained at 5 wt% or less with respect to the total weight of the porous coating layer 20, the filmed area F may be 3 wt% or more and 10 wt% or less with respect to the total weight of the polymer binder particles 21. When the polymer binder particle 21 is contained at more than 5 wt% with respect to the total weight of the porous coating layer 20, the filmed area F may be in the range of 30 wt% or more and 50 wt% or less with respect to the total weight of the polymer binder particles 21. When more than 50 wt% of the total weight of the polymer binder particles 21 contained in the porous coating layer 20 is formed into a film, the air permeability and resistance of the separator 1 manufactured by closing the pores formed inside or on the surface of the porous coating layer 20 can be increased, thereby degrading the performance of the electrochemical device. When smaller than 3 wt% of the total weight of the polymer binder particles 21 contained in the porous coating layer 20 is formed into a film, the adhesion strength to the porous polymer base 10 cannot be sufficiently secured, and thus the porous coating layer may be separated due to repeated use of the electrochemical device.

Whether the porous coating layer 20 is separated from the porous polymer base 10 due to repeated use of the electrochemical device can be confirmed by the friction coefficient due to frictional wear on the porous coating layer 20 and whether the porous coating layer 20 is separated due to friction. The friction coefficient may be measured by using a frictional wear meter according to JIS K 7125, JIS P 8147, or JIS K 5600. For example, when repetitive friction is applied by using a 5 g/diamond tip as an attachment, a static friction coefficient at a time point when the tip initially moves and a kinetic friction coefficient upon first frictional wear may be measured by using Heidon's surface property tester type 14FW. Referring to FIG. 2, the frictional wear meter (not shown) may have a horizontal and flat test surface and generate friction by placing and fixing the separator 1 on the test surface and then moving and repeatedly moving (A or B) the diamond tip T in a direction parallel to the porous polymer base 10 at a predetermined speed. A moving speed of the diamond tip T may be in the range of 50 to 200 mm/min. For example, the friction coefficient may be measured by arranging an end of the diamond tip T in an area between the surface in contact with the porous polymer base 10 of the porous coating layer 20 and the surface opposite to the surface and moving the diamond tip T in a direction parallel to the porous polymer base 10 at a speed of 100 mm/min. The end of the diamond tip T is not disposed in contact with any one surface of the porous coating layer 20. For example, the end of the diamond tip T may be disposed at a depth D that is smaller than the thickness of the porous coating layer 20. For example, when the thickness of the porous coating layer 20 is 3 µm, the end of the diamond tip T may repeatedly move in a state of being spaced at an interval of 1.0 µm to 1.5 µm from the surface in contact with the porous polymer base 10 of the porous coating layer 20. For example, when the thickness of the porous coating layer 20 is 2 µm, the end of the diamond tip T may be disposed at the depth D of 1 µm. The diamond tip T may peel the porous coating layer 20 from the porous polymer base 10 while reciprocating in an A direction, a B direction, or the A and B directions. Whether the peeling of the porous coating layer 20 occurs may be determined by visually checking a time point when the porous coating layer 20 is peeled from the porous polymer base 10 by applying repeated friction to the separator 1, and the peeling strength of the porous coating layer 20 may be checked from the number of times of repeated friction up to the peeling time point.

In the separator for an electrochemical device according to one specific example, when the end of the diamond tip T is disposed in the area between the surface in contact with the porous polymer base 10 of the porous coating layer 20 and the opposite surface facing the surface and the diamond tip moves in the direction parallel to the porous polymer base 10 at a speed of 100 mm/min, the first kinetic friction coefficient due to the frictional wear may be in the range of 1 or more and 2 or less. Specifically, the first kinetic friction coefficient due to frictional wear on the porous coating layer 20 may be in the range of 1.1 or more and 1.9 or less, 1.2 or more and 1.8 or less, 1.3 or more and 1.7 or less, or 1.4 or more and 1.6 or less. Preferably, the first kinetic friction coefficient due to frictional wear on the porous coating layer 20 may be in the range of 1.2 or more and 1.5 or less. The first kinetic friction coefficient is a kinetic friction coefficient that shows when the tip starts to move and makes the initial reciprocating motion and may show in proportion to the content of the filmed area F included in the porous coating layer 20. When the first kinetic friction coefficient exceeds 2, the excessive or half or more content of the filmed area F may be densely dispersed on any one surface of the porous coating layer 20, and the permeability and resistance of the separator 1 manufactured by closing the pores of the porous coating layer 20 can be increased, thereby degrading the performance of the electrochemical device. When the first kinetic friction coefficient is smaller than 1, the adhesion strength to the porous polymer base 10 cannot be sufficiently secured, and thus the porous coating layer 20 may be separated from the porous polymer base 10 due to repeated use of the electrochemical device.

In the separator 1 for an electrochemical device according to one specific example, when the end of the diamond tip T is disposed in the area between the surface in contact with the porous polymer base 10 of the porous coating layer 20 and the opposite surface facing the surface and the diamond tip T moves in the direction parallel to the porous polymer base 10 at a speed of 100 mm/min, a difference between the static friction coefficient due to frictional wear and the first kinetic friction coefficient may be 3 or less. Specifically, the difference between the static friction coefficient and the first kinetic friction coefficient due to frictional wear on the porous coating layer 20 may be in the range of 2.9 or less, 2.8 or less, 2.6 or less, 2.4 or less, 2.2 or less, 2.0 or less, or 1.8 or less. Preferably, the difference between the static friction coefficient and the first kinetic friction coefficient due to frictional wear on the porous coating layer 20 may be in the range of 1.0 or more and 2.9 or less. When the filmed area F is densely dispersed on any one surface of the porous coating layer 20, the difference between the static friction coefficient and the first kinetic friction coefficient shows large, which means that the pores formed inside or on the surface of the porous coating layer 20 are much more closed. When the difference value exceeds 3, the air permeability and resistance of the separator 1 manufactured by closing the pores formed inside or on the surface of the porous coating layer 20 can be increased, thereby degrading the performance of the electrochemical device.

In the separator 1 for an electrochemical device according to one specific example, when the end of the diamond tip T is disposed in the area between the surface in contact with the porous polymer base 10 of the porous coating layer 20 and the opposite surface facing the surface and the frictional wear caused by moving the diamond tip in the direction parallel to the porous polymer base 10 at a speed of 100 mm/min 5 times or more and 35 times or less, the porous coating layer 20 may be separated. Specifically, the porous coating layer 20 may be peeled from the porous polymer base 10 after performing frictional wear in the range of 6 times or more and 34 times or less, 7 times or more and 33 times or less, 8 times or more and 32 times or less, 9 times or more and 31 times or less, 10 times or more and 30 times or less, 11 times or more and 29 times or less, 12 times or more and 28 times or less, 13 times or more and 27 times or less, 14 times or more and 26 times or less, 15 times or more and 25 times or less, 16 times or more and 24 times or less, 17 times or more and 23 times or less, 18 times or more and 22 times or less, or 19 times or more and 21 times or less. The peeling means that at least a portion of the porous coating layer 20 is separated from the porous polymer base 10. Preferably, the porous coating layer 20 may be peeled from the porous polymer base 10 when frictional wear is repeated 18 times or more and 32 times or less. The separator 1 that satisfies the above-described range may show air permeability and electrical resistance suitable for application to the electrochemical device.

The separator 1 for an electrochemical device may have the air permeability of 20 s/100 cc or more and 90 s/100 cc or less. Specifically, the air permeability of the separator 1 may be in the range of 25 s/100 cc or more and 85 s/100 cc or less, 30 s/100 cc or more and 80 s/100 cc or less, 35 s/100 cc or more and 75 s/100 cc or less, 40 s/100 cc or more and 70 s/100 cc or less, 45 s/100 cc or more and 65 s/100 cc or less, or 50 s/100 cc or more and 55 s/100 cc or less. Preferably, the air permeability of the separator 1 may be in the range of 80 s/100 cc or more and 90 s/100 cc or less. When the air permeability of the separator 1 is within the above-described range, it is possible to secure the output, stability, and cycle characteristics of the electrochemical device.

When a cell is manufactured by using the separator 1 for an electrochemical device, the cell may have an electrical resistance of 0.5 Ohm or more and 1.5 Ohm or less. Specifically, the electrical resistance of the cell may be in the range of 0.6 Ohm or more and 1.4 Ohm or less, 0.7 Ohm or more and 1.3 Ohm or less, 0.8 Ohm or more and 1.2 Ohm or less, or 0.9 Ohm or more and 1.1 Ohm or less. Preferably, the electrical resistance of the cell may be in the range of 0.6 Ohm or more and 0.8 Ohm or less.

In the separator 1 for an electrochemical device according to one specific example, the adhesion strength, that is, a peel strength between the porous coating layer and the surface in contact with the porous polymer base 10 of the porous coating layer may be in the range of 100 gf/15mm or more and 200 gf/15mm or less. Specifically, the peel strength of the separator 1 may be in the range of 110 gf/15mm or more and 190 gf/15mm or less, 120 gf/15mm or more and 180 gf/15mm or less, 130 gf/15 mm or more and 170 gf/15mm or less, or 140 gf/15mm or more and 160 gf/15mm or less. Preferably, the peeling strength of the separator 1 may be in the range of 100 gf/15mm or more and 130 gf/15mm or less. When the peel strength is smaller than 100 gf/15mm, the porous coating layer is peeled from the porous polymer base 10 during the cycle lifetime of the electrochemical device, and when the peel strength is more than 200 gf/15mm, the filmed area F is densely dispersed on one surface of the porous coating layer 20, in particular, the surface in contact with the porous polymer base 10, which is shown as an increase in air permeability and electrical resistance.

In the separator 1 for an electrochemical device according to one specific example, the adhesion strength between the porous coating layer 20 and the surface in contact with the electrode of the porous coating layer 20, that is, an electrode-separator adhesion strength may be in the range of 10 gf/25mm or more and 50 gf/25mm or less. Specifically, the electrode-separator adhesion strength may be in the range of 15 gf/25mm or more and 45 gf/25mm or less, 20 gf/25mm or more and 40 gf/25mm or less, or 25 gf/25mm or more and 35 gf/25mm. Preferably, the electrode-separator adhesion strength may be in the range of 35 gf/25mm or more and 50 gf/25mm or less. When the electrode-separator adhesion strength is smaller than 10 gf/25mm, the electrode and separator are separated after manufacturing an electrode assembly, and when the electrode-separator adhesion strength exceeds 50 gf/25mm, the separator 1 in the electrode assembly may not be uniformly wetted with an electrolyte, lithium dendrites may precipitate on the surface of the separator 1.

The peel strength and the electrode-separator adhesion strength of the separator 1 may be measured by attaching a double-sided tape to the separator 1, bonding a slide glass, and then peeling the slide glass from the separator in a direction of 180° with respect to a bonding direction. For example, the peeling strength of the porous coating layer 20 may be measured by attaching the double-sided tape to the porous coating layer 20 of the separator 1 and separating the slide glass at a speed of 300 min/mm by using Instron's UTM (Universal Testing Machine). For example, the electrode-separator adhesion strength may be measured by bonding the electrode and the separator 1, then attaching the double-sided tape to the separator, and separating the slide glass at a speed of 300 min/mm by using the UTM.

In the separator 1 for an electrochemical device according to one specific example, the adhesion strength between the porous polymer base 10 and the porous coating layer 20 may be in the range of 1.5 times to 6 times the adhesion strength shown by the opposite surface facing the surface in contact with the porous polymer base 10 of the porous coating layer 20. That is, the peeling strength of the separator 1 may be in the range of 1.5 times to 6 times the electrode-separator adhesion strength. Specifically, the peel strength of the separator 1 may be in the range of 2 to 5.5 times, 2.5 to 5 times, 3 to 4.5 times, or 3.5 to 4 times the electrode-separator adhesion strength. Preferably, the peeling strength of the separator 1 may be in the range of 3 times or more and 6 times or less the electrode-separator adhesion strength. It is possible to secure the durability of the electrode assembly manufactured by bonding the separator 1 and the electrode within the above-described range.

The polymer binder particle 21 may have a glass transition temperature T_{g} of 0°C or higher and 60°C or lower. Specifically, the glass transition temperature of the polymer binder particle 21 may be in the range of 5°C or higher and 55°C or lower, 10°C or higher and 50°C or lower, 15°C or higher and 45°C or lower, 20°C or higher and 40°C or lower, or 25°C or higher and 35°C or lower. Preferably, the glass transition temperature of the polymer binder particle 21 may be in the range of 20°C or more and 40°C or less. The polymer binder particle 21 having the glass transition temperature in the above-described range may maintain the particle shape in the drying process of removing the dispersion medium contained in the coating slurry, and then at least some thereof may form the filmed area F through drying or heating in a temperature range to be described below.

The weight average molecular weight Mw of the polymer binder particle 21 may be in the range of 1,000 or more and 10,000,000 or less. Specifically, the weight average molecular weight of the polymer binder particle 21 may be in the range of 1,000 or more and 10,000,000 or less, 10,000 or more and 9,000,000 or less, 100,000 or more and 8,000,000 or less, 200,000 or more and 7,000,000 or less, 300,000 or more and 6,000,000 or less, 500,000 or more and 5,000,000 or less, 1,000,000 or more and 4,000,000 or less, or 2,000,000 or more and 3,000,000 or less. The separator 1 having a durable porous coating layer may be manufactured by adjusting the weight average molecular weight of the polymer binder particles 21 within the above-described range to secure the mechanical properties of the porous coating layer 20.

The weight average molecular weight may be measured by using gel permeation chromatography (GPC, PL GPC220, Agilent Technologies). For example, the weight average molecular weight may be measured by using TCB (Trichlorobenzene) as a solvent in a PL Olexis (Polymer Laboratories) column (column temperature: 160°C) and using an Agilent High Temperature RI detector under conditions that a concentration of the sample is 1.0 mg/mL, a flow rate is 1.0 mL/min, an injection amount is 200 *µ*ℓ (standard: polystyrene).

The porous coating layer 20 may contain the polymer binder particle 21 and the inorganic particle 22 at a weight ratio of 5:95 to 80:20. Specifically, the weight ratio of the polymer binder particle 21 and the inorganic particle 22 in the porous coating layer 20 may be in the range of 10:90 to 80:20, 20:80 to 80:20, 30:70 to 70:30, 40:60 to 60:40 or 50:50. Preferably, the weight ratio of the polymer binder particle 21 and the inorganic particle 22 may be in the range of 60:40 to 80:20. By adjusting the composition of the porous coating layer 20 in the above-described range so that the above-described content range of the total polymer binder particles 21 is formed into a film, thereby securing the durability of the porous polymer base 10 and the adhesion strength of the separator 1 at the same time.

The polymer binder particle 21 may be a copolymer containing an acrylic polymer resin or a copolymer containing an acrylic monomer. The acrylic polymer resin may be one or more selected from the group consisting of polyacrylic acid, methyl acrylate, ethyl acrylate, isopropyl acrylate, n-butylacrylate, isobutylacrylate, ethylhexyl acrylate, and methyl methacrylate, and copolymers thereof. The copolymer containing the acrylic monomer may be one or more selected from the group consisting of styrene-butadiene rubber, nitrile-butadiene rubber, acrylonitrile-butadiene rubber, and acrylonitrile-butadiene-styrene rubber. Preferably, the polymer binder particle 21 may be styrene-butadiene rubber. The separator 1 having the durability and adhesion strength of the porous coating layer 20 may be acquired by sequentially forming the filmed area F after selecting the above-described type of the polymer binder particle 21 and removing the dispersion medium in the manufacturing process of the porous coating layer 20.

The inorganic particle 22 may be an electrochemically stable one. The inorganic particle 22 is not particularly limited as long as oxidation and/or reduction reactions do not occur in an operating voltage range of the electrochemical device (e.g., 0 to 5 V based on Li/Li⁺). In particular, when the inorganic particle having a high dielectric constant is used as the inorganic particle 22, it is possible to increase the ionic conductivity of the electrolyte by contributing to an increase in the degree of dissociation of electrolyte salts, such as lithium salts, in the liquid electrolyte. Due to the above-described reasons, the inorganic particle 22 includes a high dielectric constant inorganic particle having a dielectric constant of 5 or more, preferably, 10 or more. Non-limiting examples of the inorganic particle 22 having a dielectric constant of 5 or more include BaTiO₃, Pb(Zr,Ti)O₃(PZT), b₁₋ₓLaₓZr_{1-y}Ti_{y}O₃(PLZT, 0<x<1, 0<y<1), Pb(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, or mixtures thereof.

In addition, as the inorganic particle 22, an inorganic particle having a lithium ion transport ability, that is, the inorganic particle 22 containing a lithium element and having a function of moving lithium ions without storing lithium may be used. Non-limiting examples of the inorganic particle 22 having lithium ion transport ability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride such as Li₃N (LiₓN_{y}, 0<x<4, 0<y<2), SiS₂ series glass (LiₓSi_{y}S_{z}, 0<x<3, 0<y<2, 0<z<4) such as Li₃PO₄-Li₂S-SiS₂, P₂S₅ series glass(LiₓP_{y}S_{z}, 0<x<3, 0<y<3, 0<z<7) such as LiI-Li₂S-P₂S₅, or mixtures thereof.

In addition, the inorganic particle 22 is a flame-retardant inorganic particle and may use one capable of providing flame-retardant properties to the separator or preventing a rapid increase in the temperature inside the electrochemical device. Non-limiting examples of the flame retardant inorganic particle 22 include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, These include ZrO₂, Y₂O₃, SiO₂, Al₂O₃, AlOOH, Al(OH)₃, SiC, TiO₂, H₃BO₃, HBO₂, and mixtures thereof.

An average particle diameter D50 of the inorganic particle 22 may be in the range of 50 nm or more and 5,000 nm or less. Specifically, the average particle diameter D50 of the inorganic particle 22 may be in the range of 100 nm or more and 4,500 nm or less, 200 nm or more and 4,000 nm or less, 300 nm or more and 3,000 nm or less, 400 nm or more and 2,000 nm or less, or 500 nm or more and 1,000 nm or less. When the average particle diameter of the inorganic particle 22 is smaller than 50 nm, as the specific surface area increases, an additional polymer binder for bonding between the inorganic particles 22 is required, which is disadvantageous in terms of electrical resistance. When the average particle diameter of the inorganic particle 22 exceeds 5,000 nm, the uniformity of the surface of the coating layer may be reduced, and the porous polymer base 10 or the electrode may be damaged during lamination.

An aspect ratio of the inorganic particle 22 may be in the range of 1 or more and 2 or less. Specifically, the aspect ratio of the inorganic particle 22 may be in the range of 1.1 or more and 1.9 or less, 1.2 or more and 1.8 or less, 1.3 or more and 1.7 or less, or 1.4 or more and 1.6 or less. By adjusting the aspect ratio of the inorganic particle 22 in the above-described range, it is easy to move the polymer binder particle 21 through pores between the inorganic particles 22, and form the porous coating layer 20 in which the filmed area F is uniformly dispersed through the formation of the filmed area F after the movement of the polymer binder particle 21.

The BET specific surface area of the inorganic particle 22 may be in the range of 5 m²/g or more and 25 m²/g or less. Specifically, the BET specific surface area of the inorganic particle 22 may be in the range of 6 m²/g or more and 24 m²/g or less, 7 m²/g or more and 23 m²/g or less, 8 m²/g or more and 22 m²/g or less, 9 m²/g or more and 21 m²/g or less, 10 m²/g or more and 20 m²/g or less, 11 m²/g or more and 19 m²/g or less, 12 m²/g or more and 18 m²/g or less, 13 m²/g or more and 17 m²/g or less, or 14 m²/g or more and 26 m²/g or less. By adjusting the BET specific surface area of the inorganic particle 22 within the above-described range, the movement of the polymer binder particle 21 through the pores between the inorganic particles 22 may be adjusted.

One specific example of the present disclosure provides a method of manufacturing the separator 1 for an electrochemical device including forming a coating layer including a particle area P formed of the polymer binder particle 21 and the inorganic particle 22 by coating at least one surface of the porous polymer base 10 with a coating slurry containing the polymer binder particle 21, the inorganic particle 22, and the dispersion medium, removing the dispersion medium by drying the coating layer, and forming the filmed area F by drying the coating layer and changing 3 to 50 wt% with respect to the total weight of the polymer binder particle 21. Contents that overlap the contents described above in the separator for an electrochemical device are replaced with the description of the previous specific example.

The forming of the coating layer includes coating at least one surface of the porous polymer base 10 with a coating slurry containing the polymer binder particle 21, the inorganic particle 22, and the dispersion medium. For example, the coating may be formed by a method such as a bar coater, a wire bar coater, a roll coater, a spray coater, a spin coater, an inkjet coater, a screen coater, a reverse coater, a gravure coater, a knife coater, a slot die coater, a hot melt coater, a comma coater, and a direct metering coater, but is not limited thereto. Preferably, the forming of the coating layer may include simultaneously coating both surfaces of the porous polymer base 10 with the coating slurry by using the bar coater or the slot die coater.

The forming of the coating layer may further include performing corona discharge treatment on at least one surface of the porous polymer base 10. After the performing of the corona discharge treatment, the method may include coating the porous polymer base 10 with the coating slurry. The performing of the corona discharge treatment on the at least one surface of the porous polymer base 10 can prevent a reduction in the binding strength between the surface of the porous polymer base 10 and the surface of the coating layer at a high temperature and prevent a reduction in the binding strength between the surface of the porous polymer base 10 and the surface of the coating layer by the electrolyte.

The corona discharge treatment may treat the at least one surface of the porous polymer base 10 in air at a voltage of 0.1 kV or more and 10 kV or less. Specifically, the corona discharge treatment may be performed at a voltage of 0.2 kV or more and 9 kV or less, 0.3 kV or more and 8 kV or less, 0.4 kV or more and 7 kV or less, 0.5 kV or more and 6 kV or less, 0.6 kV or more and 5 kV or less, 0.7 kV or more and 4 kV or less, 0.8 kV or more and 3 kV or less, 0.9 kV or more and 2 kV or less, or 1.0 kV or more and 2 kV or less. Preferably, the corona discharge treatment may be performed in air at a voltage of 1.8 kV. By adjusting the applied voltage of the corona discharge treatment within the above-described range, an appropriate number of functional groups may be formed on the surface of the porous polymer base 10, and damage to the surface of the porous polymer base 10 can be prevented.

The removing of the dispersion medium may include evaporating the dispersion medium contained in the coating layer by drying or heating the coating layer and may be referred to as a first heating operation. The first heating operation may be performed at a temperature at which only the dispersion medium contained in the coating layer may be evaporated without deforming the polymer binder particles 21 contained in the coating layer. For example, the first heating operation may be to heat the coating layer at a predetermined temperature, and the temperature of the surface of the coating layer does not exceed 50°C. For example, the coating layer performing the first heating operation may be formed of the particle area P formed of polymer binder particle 21 and the inorganic particle 22. When the coating layer is heated under the above condition, thermal energy is first used to heat the dispersion medium to change the phase and may not be used to deform the polymer binder particle 21. The filmed area F may be formed by removing the dispersion medium and then deforming at least some of the polymer binder particles 21 through the second heating operation to be described below.

The forming of the filmed area F may include exposing the coating layer at a temperature of the glass transition temperature T_{g} or higher and T_{g} +40°C or lower of the polymer binder particles 21 and may be referred to as a second heating operation. Specifically, the second heating operation may include heating the coating layer at a temperature of T_{g} +5°C or higher and T_{g} +35°C or lower, T_{g} + 10°C or higher and T_{g} +30°C or lower, or T_{g} +15°C or higher and T_{g} +25°C or lower of the polymer binder particle 21. Preferably, the second heating operation may include heating the coating layer at T_{g} +20°C or higher and T_{g} +40°C or lower.

The second heating operation may include heating the coating layer in the above-described temperature range for 1 hour or more and 24 hours or less. Specifically, the second heating operation may include heating the coating layer in the above-described temperature range for 2 hours or more and 23 hours or less, 3 hours or more and 22 hours or less, 4 hours or more and 21 hours or less, 5 hours or more and 20 hours or less, 6 hours or more and 19 hours or less, 7 hours or more and 18 hours or less, 8 hours or more and 17 hours or less, 9 hours or more and 16 hours or less, 10 hours or more and 15 hours or less, 11 hours or more and 14 hours or less, or 12 hours or more and 13 hours or less. Preferably, the second heating operation may include heating the coating layer in the above-described temperature range for 6 hours or more and 24 hours or less. The filmed area F may be formed by deforming 3 to 50 wt% of the polymer binder particle 21 with respect to the total weight of the polymer binder particle 21 at the above-described temperature or in the ranges of temperature and time. When the heating temperature or time is outside the above-described range, the filmed area F is excessively formed or is formed densely on any one surface of the porous coating layer 20, causing a rapid increase in air permeability and electrical resistance of the separator 1.

The second heating operation may be a single operation performed at a heating temperature in the above-described range. Alternatively, the second heating operation may be performed in combination of a plurality of operations with the same or different heating temperatures and times. For example, the second heating operation may include a 2-1 heating operation of heating the coating layer at a temperature of T_{g} +30°C or higher and T_{g} +40°C or lower for 1 hour or less, a 2-2 heating operation of heating the coating layer at a temperature of T_{g} +20°C or higher and T_{g} +30°C or lower for 1 hour or more and 2 hours or less, a 2-3 heating operation of heating the coating layer at a temperature of T_{g} +10°C or higher and T_{g} +20°C or lower for 2 hours or more and 4 hours or less, and heating the coating layer at a temperature of T_{g} or higher and T_{g} + 10°C or lower for 4 hours or more and 8 hours or less. Preferably, the preceding heating operation may include uniformly forming the filmed area F in the thickness direction of the porous coating layer 20 by heating the coating layer at a higher temperature than the following heating operation.

The polymer binder particle 21 contained in the porous coating layer 20 may not maintain an original shape in the above-described temperature and time range and may be formed into a film. As the polymer binder particle 21 may be formed into a film to additionally bind the inorganic particles 22, additionally bind the inorganic particle 22 and the porous polymer base 10, or additionally bind the polymer binder particle 21 and the inorganic particle 22 or the polymer binder particle 21 and the porous polymer base 10. Therefore, the separator 1 with improved durability of the porous coating layer 20 is provided because the filmed area F improves the mechanical properties of the porous coating layer 20 and at the same time, increases the adhesion strength between the porous coating layer 20 and the porous polymer base 10.

The method of manufacturing the separator 1 may further include storing at room temperature or cooling the separator 1 on which the porous coating layer 20 is formed after the forming of the filmed area F. The filmed area F may be left at a temperature below the glass transition temperature of the polymer binder particle 21 to allow the irregularly formed filmed area F to harden in a state of forming the above-described additional binding.

One specific example of the present disclosure provides a separator for an electrochemical device including a positive electrode, a negative electrode, and the separator 1 interposed between the positive electrode and the negative electrode, in which the separator 1 is the separator for an electrochemical device of the above-described specific example. The electrochemical device may be manufactured by inserting an electrode assembly including the positive electrode, the negative electrode, and the separator 1 interposed between the positive electrode and the negative electrode into a case or a pouch and sealing the same. Before sealing the case or the pouch, the electrode assembly may be impregnated with the electrolyte by injecting the electrolyte. The shape of the case or the pouch is not limited. For example, the electrochemical device may be a cylindrical, prismatic, coin-shaped, or pouch-shaped lithium secondary battery.

The positive electrode and the negative electrode may be coated by applying and drying an electrode active material on at least one surface of each current collector. The current collector may be made of a material having conductivity without causing a chemical change in electrochemical device. For example, the current collector for a positive electrode may be made of aluminum, nickel, titanium, fired carbon, or stainless steel, or one formed by treating a surface of aluminum or stainless steel with carbon, nickel, titanium, silver, etc., but is not limited thereto. For example, the current collector for a negative electrode may be made of copper, nickel, titanium, fired carbon, or stainless steel, or one formed by treating a surface of copper or stainless steel with carbon, nickel, titanium, silver, etc., but is not limited thereto. The current collector may be formed in various forms such as a thin metal plate, film, foil, net, porous material, or foam.

The positive electrode includes a positive electrode current collector and a positive electrode active material layer containing a positive electrode active material, a conductive material, and a binder resin on at least one surface of the current collector. The positive electrode active material may be one type or mixture of two types among a layered compound such as lithium manganese composite oxide (LiMn₂O₄, LiMnO₂, etc.), lithium cobalt oxide (LiCoO₂), or lithium nickel oxide (LiNiO₂), or a compound substituted with one or more transition metals, lithium manganese oxides such as LiMnO₃, LiMn₂O₃, and LiMnO₂ represented by Chemical Formula Li₁₊ₓMn₂₋ₓO₄ (here, x denotes 0 to 0.33), lithium copper oxide (Li₂CuO₂), vanadium oxides such as LiV₃O₈, LiV₃O₄, V₂O₅, and Cu₂V₂O₇, Ni site type lithium nickel oxides represented by Chemical Formula LiNi₁₋ₓMₓO₂ (here, M=Co, Mn, Al, Cu, Fe, Mg, B or Ga and x=0.01 to 0.3), lithium manganese complex oxide represented by Chemical Formula LiMn₁₋ₓMₓO₂ (here, M=Co, Ni, Fe, Cr, Zn or Ta, and x=0.01 to 0.1) or Li₂Mn₃MO₈ (here, M=Fe, Co, Ni, Cu or Zn), LiMn₂O₄ in which a portion of Li in Chemical Formula is substituted with an alkaline earth metal ion, disulfide compounds, and Fe₂(MoO₄)₃.

The negative electrode includes a negative electrode current collector, a negative electrode active material layer formed on at least one surface of the current collector, and containing a negative active material a conductive material and a binder resin. The negative electrode may contain, as the negative active material, one type or mixture of two types selected from lithium metal oxide, carbon such as non-graphitizable carbon, and graphitic carbon, a silicon-based material such as LiₓFe₂O₃ (0≤x≤1), LiₓWO₂ (0≤x≤1), Si, SiOₓ (0<x<2), SiC, and a Si alloy, a metal composite oxide such as SnₓMe₁₋ₓMe'_{y}O_{z} (Me: Mn, Fe, Pb, Ge, Me', Al, B, P, and Si, elements of groups 1, 2, and 3 of the periodic table and halogens, 0<x≤1, 1≤y≤3, 1≤z≤8), a lithium metal, a lithium alloy, a tin-based alloy, metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅, a conductive polymers such as polyacetylene, Li-Co-Ni based materials, and titanium oxide.

The conductive material may be any one selected from the group consisting of graphite, carbon black, carbon fiber or metal fiber, metal powder, conductive whisker, conductive metal oxide, carbon nanotube, activated carbon, and polyphenylene derivative or a mixture of two or more types of conductive materials. The carbon nanotube has a cylinder shape having a graphite sheet having a nano-sized diameter and has a sp² bond structure and shows conductor or semiconductor characteristics according to an angle and structure at which the graphite sheet is rolled. According to the number of bonds forming a wall, the carbon nanotubes may be classified into a single-walled carbon nanotubes (SWCNT), a double-walled carbon nanotubes (DWCNT), and a multi-walled carbon nanotubes (MWCNT), and the carbon nanotubes may be appropriately selected according to the purpose of a dispersion solution. More specifically, the conductive material may be one or a mixture of two or more selected from the group consisting of natural graphite, artificial graphite, super-p, acetylene black, Ketjen black, channel black, furnace black, lamp black, summer black, denka black, aluminum powder, nickel powder, oxidation zinc, potassium titanate, and titanium oxide.

As the binder resin, a polymer resin commonly used in electrodes of the electrochemical device may be used. Non-limiting examples of the binder resin may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, etc., but are not limited thereto.

The electrolyte solution is a salt of the same structure as A⁺B⁻, in which A⁺ includes an ion consisting of an alkali metal cation such as Li⁺, Na⁺, K⁺ or combinations thereof, and B⁻ includes salts containing anions consisting of PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or combinations thereof are dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone), or mixtures thereof, but is not limited thereto.

The electrochemical device including the electrode assembly may be a lithium secondary battery. The battery may be used as a unit cell and used as a device including a battery module including the unit cell, a battery pack including the battery module, and a device including the battery pack as a power source. The device may include small devices such as a computer, a cell phone, and a power tool, electric vehicles including an electric vehicle (EV), a hybrid electric vehicle (HEV), a plug-in hybrid electric vehicle (PHEV), etc., that are moved by receiving power by an electric motor, an electric two-wheeled vehicle including an electric bicycle and an electric scooter, an electric golf cart, medium and large-sized devices such as a power storage systems, but are not limited thereto.

Hereinafter, the present disclosure will be described in more detail through specific examples and experimental examples. The following examples and experimental examples are illustrative of the present disclosure, and the present disclosure is not limited by the following examples and experimental examples.

### Example 1

### Provision of coating slurry

100 mL of aqueous dispersion medium was provided by mixing water and isopropyl alcohol at a weight ratio of 95:5 at room temperature (25°C). A coating slurry in which polymer binder particles and inorganic particles were dispersed was manufactured by adding 7.7 g of an acrylic polymer binder (styrene-acryl, particle diameter: 350 to 400 nm, T_{g}: 40°C) and 27.3 g of inorganic particles (Al₂O₃, particle diameter: 400 nm) into the aqueous dispersion medium and stirring the same by using a shaker for 60 minutes.

### Provision of porous base

As the porous base, a polyethylene film (MI: 0.2 g/10 min, Tₘ: 135°C, porosity: 45%, average pore size: 45 nm, size: 20 cm×30 cm, and thickness: 9 µm) was used.

### Manufacture of separator

A porous coating layer whose each coating has the thickness of 2 µm was formed by coating both surfaces of the polyethylene film with the coating slurry by using a bar coater.

A process of applying low-temperature airflow to the polyethylene film on which the porous coating layer was formed, drying (first heating) the same while adjusting a surface temperature of the porous coating layer not to exceed 50°C, and removing a dispersion medium was repeated five times.

Subsequently, a separator having the thickness of 13 µm was manufactured by applying high-temperature airflow of 70°C to the separator for 24 hours (second heating).

### Example 2

A separator was manufactured in the same method as in Example 1, except that high-temperature airflow of 80°C was applied to the separator for 24 hours after removing the dispersion medium upon manufacturing the separator.

### Example 3

A separator was manufactured in the same method as in Example 1, except that high-temperature airflow of 70°C was applied to the separator for 1 hour after removing the dispersion medium upon manufacturing the separator.

### Example 4

A separator was manufactured in the same method as in Example 1, except that low-temperature airflow of 40°C was applied to the separator for 24 hours after removing the dispersion medium upon manufacturing the separator.

### Comparative Example 1

A separator was manufactured in the same method as in Example 1, except that additional high-temperature airflow was not applied to the separator after removing the dispersion medium upon manufacturing the separator.

### Comparative Example 2

A separator was manufactured in the same method as in Example 1, except that high-temperature airflow of 80°C was applied to the separator for 48 hours after removing the dispersion medium upon manufacturing the separator.

### Comparative Example 3

A separator was manufactured in the same method as in Example 1, except that high-temperature airflow of 90°C was applied to the separator for 24 hours after removing the dispersion medium upon manufacturing the separator.

### Experimental Example 1. Check durability of porous coating layer

The separators of the Examples and Comparative Examples were each disposed on Heidon's surface property tester type 14FW equipment, a 5g/dia tip was attached as an attachment to the equipment, and then an end of the diamond tip was inserted at a depth of 1 µm of the porous coating layer of the separator.

Thereafter, by reciprocating the diamond tip at a speed of 100 mm/min to generate repeated friction, a static friction coefficient was measured at the moment the diamond tip starts moving, and a first kinetic friction coefficient was measured during the first reciprocating motion. While reciprocating, the number of reciprocating movements required until the porous coating layer was peeled from the porous polymer base was counted. The measured friction coefficient and the number of reciprocating movements required to the peeling time point are shown in Table 1 below.

### Experimental Example 2. Check of physical properties of separator

### Measurement for peel strength

A test sample was provided by sampling each separator to a width of 20 mm and attaching the same to a glass slide by using double-sided tape (3M) having a width of 18 mm.

The peel strength was measured by separating the slide glass from the separator at a speed of 300 mm/min in a direction of 180° with respect to a bonding direction by using a UTM.

### Measurement for electrode-separator adhesion strength

A negative electrode was manufactured by mixing a negative active material (weight ratio (5:5) of natural graphite and artificial graphite), a conductive material (super P), and a binder (polyvinylidene fluoride (PVdF)) at a weight ratio of 92:2:6, dispersing the same in water, and then coating the same on copper foil.

An electrode adhesion strength test sample was manufactured by sampling the separators of Examples and Comparative Examples and the negative electrode with a width of 20 mm, overlapping the same, and then pressing the same at 60°C at a pressure of 6.5 MPa for 1 second.

The electrode adhesion strength of the separator was measured by separating the negative electrode from the separator at a speed of 300 mm/min in a 180° direction with respect to the bonding direction by using UTM.

### Measurement for air permeability

For the air permeability, the time required for the air of 100 cc to transmit the separator having a diameter of 28.6 mm and an area of 645 mm² was measured by using Gurley densometer (Gurley, 4110N).

### Measurement for electrical resistance

For electrical resistance, resistance of a coin cell was measured by using an EIS (electrochemical impedance spectroscopy) device after manufacturing the coin cell of 2016 size by using the separators of Examples and Comparative Examples and then leaving the same for 3 hours.

As an electrolyte of the coin cell, there was used one drop of an electrolyte containing 3 mol of vinylene carbonate (VC), 1.5 mol of propane sultone (PS), 1 mol of ethylene sulfate (ESa), and 1 mol of lithium salt LiPF₆ as an additive in a solvent mixed with ethylene carbonate (EC)/ethylmethyl carbonate (EMC) at a ratio of 3/7.

**[Table 1]**

| | Comparati ve Example 1 | Comparati ve Example 2 | Comparati ve Example 3 | Exampl e 1 | Exampl e 2 | Exampl e 3 | Exampl e 4 |
|---|---|---|---|---|---|---|---|
| Second heating Presence or absence and condition | X | 80°C | 90°C | 70°C | 80°C | 70°C | 40°C |
| | | 48 hrs | 24 hrs | 24 hrs | 24 hrs | 1 hr | 24 hrs |
| Filmed area/total weight of polymer binder particles | 0 wt% | 61 wt% | 83 wt% | 41 wt% | 50 wt% | 3 wt% | 15 wt% |
| Number of times of repeated friction motion in which porous coating layer is peeled | 3 | 35 | 39 | 28 | 32 | 18 | 9 |
| Static friction coefficient | 5.92 | 3.31 | 3.24 | 2.96 | 2.53 | 4.05 | 3.81 |
| First kinetic friction coefficient | 0.81 | 2.89 | 2.76 | 1.33 | 1.47 | 1.23 | 1.17 |
| Difference between static friction coefficient and first kinetic friction coefficient | 5.11 | 0.33 | 0.48 | 1.03 | 1.06 | 2.82 | 2.64 |
| Peel strength | 30 gf/15mm | 294 gf/15mm | 326 gf/15mm | 117 gf/15m m | 159 gf/15m m | 88 gf/15m m | 91 gf/15m m |
| Electrode-separator adhesion strength | 50 gf/25mm | 2 gf/25mm | 2.1 gf/25mm | 48 gf/25m m | 46 gf/25m m | 48 gf/25m m | 47 gf/25m m |
| Air permeabili ty | 80 s/100 cc | 351 s/100 cc | 498 s/100 cc | 85 s/100 cc | 88 s/100 cc | 83 s/100 cc | 82 s/100 cc |
| Resistance | 0.57 Ohm | 2.94 Ohm | 3.22 Ohm | 0.61 Ohm | 0.63 Ohm | 0.59 Ohm | 0.55 Ohm |

### [Description of reference numerals]

- 1:: separator
- 10:: porous polymer base
- 20:: porous coating layer
- 21:: polymer binder particle
- 22:: inorganic particle
- P:: particle area
- F:: filmed area
- T:: diamond tip

## Claims

1. A separator for an electrochemical device, comprising:
a porous polymer base; and
a porous coating layer including a particle area formed of a polymer binder particle and an inorganic particle and a filmed area including a deformed polymer binder particle and formed on at least any one surface of the porous polymer base,
wherein the filmed area is in the range of 3 to 50 wt% with respect to the total weight of the polymer binder particles.

2. The separator of claim 1, wherein, when an end of a diamond tip is disposed in an area between a surface in contact with the porous polymer base of the porous coating layer and an opposite surface facing the surface and the diamond tip moves in a direction parallel to the porous polymer base at a speed of 100 mm/min, a first kinetic friction coefficient due to frictional wear is in the range of 1 to 2.

3. The separator of claim 1, wherein, when an end of a diamond tip is disposed in an area between a surface in contact with the porous polymer base of the porous coating layer and an opposite surface facing the surface and the diamond tip moves in a direction parallel to the porous polymer base at a speed of 100 mm/min, a difference between a static friction coefficient due to frictional wear and a first kinetic friction coefficient is 3 or less.

4. The separator of claim 1, wherein an adhesion strength between the porous polymer base and the porous coating layer is in the range of 1.5 to 6 times an adhesion strength shown by an opposite surface facing a surface in contact with the porous polymer base of the porous coating layer.

5. The separator of claim 1, wherein the polymer binder particle includes one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber, and acrylonitrile-butadiene-styrene rubber.

6. The separator of claim 1, wherein the filmed area is formed by exposing the polymer binder particle at a temperature in the range of a glass transition temperature(T_{g}) to T_{g} +40°C of the polymer binder particle.

7. An electrochemical device including a positive electrode, a negative electrode, and a separator disposed between the positive electrode and the negative electrode,
wherein the separator is the separator for an electrochemical device of any one of claims 1 to 6.

8. A method of manufacturing a separator for an electrochemical device, comprising:
forming a coating layer including a particle area formed of a polymer binder particle and an inorganic particle by coating at least one surface of a porous polymer base with a coating slurry including the polymer binder particle, the inorganic particle, and a dispersion medium;
removing the dispersion medium by drying the coating layer; and
forming a filmed area by deforming 3 to 50 wt% with respect to the total weight of the polymer binder particle by drying the coating layer.

9. The method of claim 8, wherein the removing of the dispersion medium includes preventing a surface of the coating layer from exceeding 50°C.

10. The method of claim 8, wherein the forming of the filmed area includes exposing the coating layer at a temperature in the range of a glass transition temperature(T_{g}) to T_{g}+40°C of the polymer binder particle for 24 hours or less.
